# EUROPEAN PATENT APPLICATION

(11) **EP 3 937 100 A1**
(43) Date of publication of application: **12.01.2022**
(21) Application number: 20184812.4
(22) Date of filing: 08.07.2020
(51) Int. Cl.: G06Q 10/06, G06Q 10/00

(54) **METHOD FOR IMPROVING A PHYSICAL PRODUCTION PROCESS**

(71) Applicant: Covestro Deutschland AG, 51373 Leverkusen (DE)
(72) Inventor: TABBI, Giuseppe Teodoro Maria, 40593 Düsseldorf (DE); Rother, Anja, 50672 Köln (DE)
(74) Representative: Levpat

(57) **Abstract**

The invention is directed at a method for improving a physical production process, wherein a precursor charge (1) of precursor material is produced at a precursor production facility (2) through a precursor production process based on applied precursor production settings (3), wherein the applied precursor production settings (3) are entered into a distributed ledger (4), wherein a derivative product (6a, b) is produced at a derivative production facility (5a, b) through a derivative physical production process from at least part of the precursor charge (1), which derivative production facility (5a, b) is distant from the precursor production facility (2), wherein derivative production data (7a, b) describing the derivative physical production process are entered into the distributed ledger (4), wherein the derivative product (6a, b) is recycled at a recycling facility (8a, b) through a recycling process, which recycling facility (8a, b) is distant from the derivative production facility (5a, b), wherein recycling data (9a, b) describing the recycling process are entered into the distributed ledger (4), wherein an analysis system (10) retrieves and enters the applied precursor production settings (3), the derivative production data (7a, b) and the recycling data (9a, b) from the distributed ledger (4) to a computational modelling system (12), which computational modelling system (12) describes a computational relationship between the derivative production data (7a, b), the precursor production settings (3) and the recycling data (9a, b), to obtain updated precursor production settings (11), and wherein the updated precursor production settings are applied to a next precursor production process to obtain a next precursor charge of precursor material.

## Description

The invention is directed at a method for improving a physical production process.

For almost any kind of product that is produced in a physical production process or in particular a chemical production process, ensuring high standards for the entire product life becomes more and more important. This means, that not only the production, storage and use - potentially spanning many years - of such a product is safe for users and the environment, but also the process of recycling. Further, it is desired that the recycling process is as efficient as possible in that as much valuable substance can be recovered in recycling for reuse e.g. in new products and that on the other hand dangerous substances are as precisely as possible identified and extracted in the recycling process so that the amount of material that has to be treated as special waste is minimized.

Just as the production parameters of any product as well as the production parameters of any precursor material for that product - which product thereby is a derivative product with respect to the precursor material - affect the product properties of that derivative product, so do they also affect the recycling properties of that product. However, since the entity performing the recycling is not usually the customer of the product, feedback with respect to the quality of the recycling that was possible to the producer is usually only indirect at best. In case of a defective product, feedback is usually prompt and direct. In the case of recycling, not only is there often not a direct contractual relationship between recycler and producer, but also the time that has elapsed between production and recycling may span many years. In addition, the quality of the recycling may also depend significantly on other factors and influences in the lifetime of the product which were either not documented in the first place or which, even if they were documented, are difficult to retrieve and to verify from the entity that kept the records for the documentation. In this situation, performing an accurate analysis on which production factors of the precursor material the recyclability of the derivative product depends and in which way is very difficult.

Consequently, there is a need to improve a physical production process so that quality results from recycling can be analysed such that specific influences from precursor production can be identified and precursor production parameters adjusted such that recycling is improved.

With respect to a method for improving a physical production process, the problem of the invention is solved with a method for improving a physical production process with the features of claim 1.

The invention is based on the recognition that the information from the production of the derivative product as well as information from the production of the precursor to the derivative product and potentially additional information about the transportation, use and storage of the derivative product may be stored in a distributed ledger. In this way, it can be ensured that the integrity and completeness of the data thus recorded stays intact and that no information is lost. Moreover, the information remains connected in the sense that, even though the storage itself may be decentralized, the ledger itself is a single complete entity. Additional information helps to make the analysis more precise by making it possible to take into account and therefore correct for external factors which may also have a significant influence on the recycling quality.

The method according to the invention is for improving a physical production process. In the method according to the invention, a precursor charge of precursor material is produced at a precursor production facility through a precursor production process based on applied precursor production settings. In other words, the precursor production settings are applied to the precursor production process and at least partially determine the precursor production process. The precursor production process may comprise a physical production process.

Further in the method according to the invention, the applied precursor production settings are entered into a distributed ledger. Here the distributed ledger is a consensus of replicated, shared, and synchronized digital data geographically spread across multiple sites. Preferably, the distributed ledger is a blockchain.

In the method according to the invention, a derivative product is produced at a derivative production facility through a derivative physical production process from at least part of the precursor charge, which derivative production facility is distant from the precursor production facility. In general, the precursor charge will comprise sufficient precursor material for the production of many instances of products produced from the precursor material, which products are here denoted derivative products. Consequently, not an entire precursor charge needs to be supplied to a single derivative production facility. However, it may also be that an entire precursor charge is transported to a single derivative production facility.

In general, the distance between the precursor production facility and the derivative production facility may be of any distance. Preferably, the distance between the precursor production facility and the derivative production facility is at least 5 km, especially at least 10 km, preferably at least 20 km and in particular preferred at least 50 km. In particular, the distance between the precursor production facility and the derivative production facility may be at least 500 km. Preferably, the at least part of the precursor charge is transported to the derivative production facility.

The part of the precursor charge at the derivative production facility forms a precursor for the derivative physical production process. The derivative physical production process is a physical production process. It is to be noted that the expressions "precursor" and "derivative" only denote the relative process-wise relationship between the individual process steps. In other words, a product that is derivative may itself form the precursor for a further process and vice versa.

In the method according to the invention, derivative production data describing the derivative physical production process are entered into the distributed ledger, and the derivative product is recycled at a recycling facility through a recycling process, which recycling facility is distant from the derivative production facility, and recycling data describing the recycling process are entered into the distributed ledger. Preferably, the distance between the recycling facility and the derivative production facility is at least 50 km. In particular, the distance between the recycling facility and the derivative production facility may be at least 500 km. Preferably, the derivative product is transported to the recycling facility.

It is to be noted that generally, the derivative product is not directly transported from the derivative production facility to the recycling facility. To the contrary, in general the derivative product is transported to successive stages of wholesale and/or retail sales locations and subsequently to one or more customer locations. If the derivative product is a tool or a component of a tool used at different sites, the derivative product may also be transported to a series of working locations, with all the different locations distant from each other. The time between each transport from one location to another may be days, weeks or even months. The time spent at any location may have the corresponding length. If the derivative product is a vehicle or component thereof, the derivative product may also spend a total of many months or even years moving. In general, the derivative product is only transported to the recycling facility at the end of the product life cycle. That point in time may be many months or years after the production of the derivative product at the derivative production facility.

In the method according to the invention, an analysis system retrieves and enters the applied precursor production settings, the derivative production data and the recycling data from the distributed ledger to a computational modelling system, which computational modelling system describes a computational relationship between the derivative production data, the precursor production settings and the recycling data, to obtain updated precursor production settings. The computational modelling system may comprise a database to which modelling algorithms are applied. The computational modelling system may also comprise the modelling algorithms themselves. The computational relationship described by the computational modelling system may also involve additional terms and quantities.

In the method according to the invention, the updated precursor production settings are applied to a next precursor production process to obtain a next precursor charge of precursor material. In other words, new precursor production settings are generated, potentially by modifying the applied precursor production settings, and used in the precursor production process for a new precursor charge. In this way, information at least from the derivative physical production process, the precursor production process and the recycling process may be used to improve the precursor production process for the next precursor charge.

Here and hereinafter, a physical production process and more particularly the derivative physical production process is any production process which involves a physical change - or several physical changes - in the precursor charge during the derivative physical production process. For example, any change in the state of matter of the precursor charge is such a physical change. In particular, the melting and solidification of a thermoplastic material in an injection molding process is a physical change. It follows that an injection molding process is a derivative physical production process within the meaning of this invention. Further, the physical production process may comprise a reaction injection molding or casting process. For example, the reaction injection molding or casting process may be a reaction injection molding or casting process for creating a polyurethane. Thus, the derivative product may be a product comprising polyurethane. In particular, the reaction injection molding or casting process may comprise the reaction of a polyisocyanate with a polyol and preferably with a surfactant, a catalyst and/or a blowing agent. Such a reaction may comprise the generation of a foam, here in particular the polyurethane. The precursor material may accordingly comprise a polyisocyanate, a polyol, a surfactant, a catalyst and/or a blowing agent. In addition to the physical change, the derivative physical production process may also comprise further changes, for example chemical or mechanical changes in the precursor charge.

In general, the applied precursor production settings may comprise any settings that influence the precursor production process. According to a preferred embodiment of the method of the invention, the applied precursor production settings comprise a precursor formulation for specifying ingredients for the production of the precursor charge of precursor material. Here it is preferred that the precursor formulation comprises a specification of ingredients and/or specifications of proportion, weight, temperature and/or volume of the respective ingredients.

In principle, arbitrary additional information may be relied upon by the computational modelling system. According to a further preferred embodiment of the method of the invention, a laboratory charge of precursor material is produced at a laboratory facility in a laboratory production process and laboratory production data describing the laboratory production process are entered into the distributed ledger. Such a laboratory facility permits very precise measurements in a tightly controlled situation on a small production scale. Preferably, the laboratory production data comprise the precursor formulation. Further preferably, the analysis system retrieves the laboratory production data from the distributed ledger and also enters it to the computational modelling system and that the computational relationship also includes the laboratory production data. In this way, also data from a laboratory production of the precursor material may be used to improve the precursor production process.

A preferred embodiment of the method according to the invention is characterized in that a pilot plant charge of precursor material is produced at a pilot plant facility in a pilot plant production process and in that pilot plant production data describing the pilot plant production process are entered into the distributed ledger. Compared to a laboratory facility, such a pilot plant facility permits precursor production in a situation which is closer to large-scale production. Preferably, the pilot production data comprise the precursor formula. In particular it may be that the analysis system retrieves the pilot plant production data from the distributed ledger and also enters it to the computational modelling system and that the computational relationship also includes the pilot plant production data. In this way, the data that the computational modelling system relies upon is further extended.

There may be other processes involving the derivative product for which data is obtained and put to use for the computational modelling system, thereby making it more accurate. A further preferred embodiment of the method of the invention is characterized in that the derivative product is transported in a logistics process and that logistics data describing the logistics process are entered into the distributed ledger. Preferably, the analysis system retrieves the logistics data from the distributed ledger and also enters it to the computational modelling system and the computational relationship also includes the logistics data.

According to a preferred embodiment of the method of the invention, precursor production measurement data measured from the precursor production process are entered into the distributed ledger. Whereas the applied precursor production settings present data that can be set by the user to determine or influence the precursor production process, precursor production measurement data comprises data that is measured from the precursor production process. In other words, whereas the applied precursor production settings are input to the precursor production process from the point of view of a user, the precursor production measurement data are output from the precursor production process from the point of view of a user. Preferably, the analysis system retrieves the precursor measurement data from the distributed ledger and also enters it to the computational modelling system and the computational relationship also includes the precursor production measurement data.

According to a further preferred embodiment of the method of the invention, the derivative production data comprises derivative production settings applied to the derivative physical production process. With respect to the derivative physical production process, these derivative production settings are analogous to the applied precursor production settings with respect to the precursor production process. Preferably, the derivative production data comprises derivative process measurements measured from the derivative physical production process.

In general, the derivative production settings may be determined in an arbitrary manner. Preferably, the derivative production settings are also determined based on the applied precursor production settings. In other words, the derivative production settings are determined based at least to some degree on the applied precursor production settings. In particular, the derivative production settings may be also determined based on the laboratory production data, the pilot plant production data and/or the precursor production measurement data.

A preferred embodiment of the method of the invention is characterized in that the recycling data comprises recycling process settings applied to the recycling process and in that the recycling process settings are determined based on the applied precursor production settings and the derivative production data. In this way, not only are future precursor production settings improved but also the process settings of the recycling process for the derivative product from the current precursor charge. Preferably, the recycling process settings are also determined based on the laboratory production data, the pilot plant production data, the logistics data and/or the precursor production measurement data.

In principle, the recycling process may comprise recycling steps which are arbitrary in kind and number. A further preferred embodiment of the method of the invention is characterized in that the recycling process comprises recovering at least one substance from the derivative product and that the recycling data comprises a recycling quality metric for describing a quality parameter of the recycling process. The recycling process may also comprise a separation step in which recycling components from the derivative product are sorted based on an identification of the at least one substance to be recovered.

In principle, the recycling quality metric may describe an arbitrary quality parameter of the recycling process. According to a preferred embodiment of the method of the invention, the recycling quality metric describes a quantity of toxic materials generated in the recycling process and/or that the recycling quality metric describes a proportion of a substance that was recovered in the recycling process. It is desirable to reduce or minimized the quantity of toxic materials generated in the recycling process. On the other hand, it is desirable to increase or maximize the proportion of a substance that was recovered in the recycling process.

In principle, the updated precursor production settings may have been determined in order to improve an arbitrary part or aspect of the life cycle of the precursor charge and the derivative product. According to a further preferred embodiment of the method of the invention, the updated precursor production settings are obtained in order to improve the recycling quality metric. In other words, the production even of the precursor charge is changed so that the recycling process becomes more efficient, less toxic, less complex or results in a higher recovery rate.

In principle, the information entered into the distributed ledger may be entered in any form. A preferred embodiment of the method of the invention is characterized in that the applied precursor production settings, the derivative production data and the recycling data are entered into the distributed ledger as respective encrypted applied precursor production setting, encrypted derivative production data and encrypted recycling data. In this way, the distributed ledger may be made available to a large number of participants for entering data and having that entered data secured against tampering while at the same making sure that the dissemination of confidential information remains under the control of the party that entered that information into the distributed ledger. It is further preferred that the laboratory production data, the pilot plant production data, the logistics data and/or the precursor production measurement data are entered into the distributed ledger as respective encrypted laboratory production data, encrypted pilot plant production data, encrypted logistics data and/or encrypted precursor production measurement data.

In general, the precursor charge may be transported to a single derivative production facility for production of a derivative product. Here in particular, more than one derivative product may be produced from the precursor charge. However, a further preferred embodiment of the method of the invention is characterized in that a respective derivative product is produced at at a plurality of derivative production facilities through a respective derivative physical production process from a respective part of the precursor charge, wherein the derivative production facilities are each distant from the precursor production facility and to each other, wherein respective derivative production data describing the derivative physical production process are entered into the distributed ledger. It is to be noted that at each of the derivative production facilities more than one respective derivative product may be produced through a respective derivative physical production process. Further, the respective derivative physical production process as well as the derivative physical product produced at each derivative production facility may differ from each other to a degree which is in principle arbitrary. In this way, the precursor charge may be used for a number of different derivative physical production processes and the information obtained from each of these derivative physical production processes kept in the distributed ledger and used for analysis.

According to a preferred embodiment of the method of the invention, the derivative production data from each derivative production process are entered into the distributed ledger as respective encrypted derivative production data. In this way it is ensured that derivative physical production processes undertaken by different entities such as different companies can share the same distributed ledger without having to publicize potentially sensitive information with competitors.

In principle, the recycling for all derivative products from a single precursor charge may be undertaken at a single recycling facility. However, according to a further preferred embodiment of the method of the invention, each derivative product is recycled at a respective recycling facility, each distant from the derivative production facilities and each other, through a respective recycling process, wherein respective recycling data describing the respective recycling process are entered into the distributed ledger. In this way also recycling data from different recycling facilities may be securely saved and used for analysis. Preferably, the recycling data from each recycling process are entered into the distributed ledger as respective encrypted recycling data.

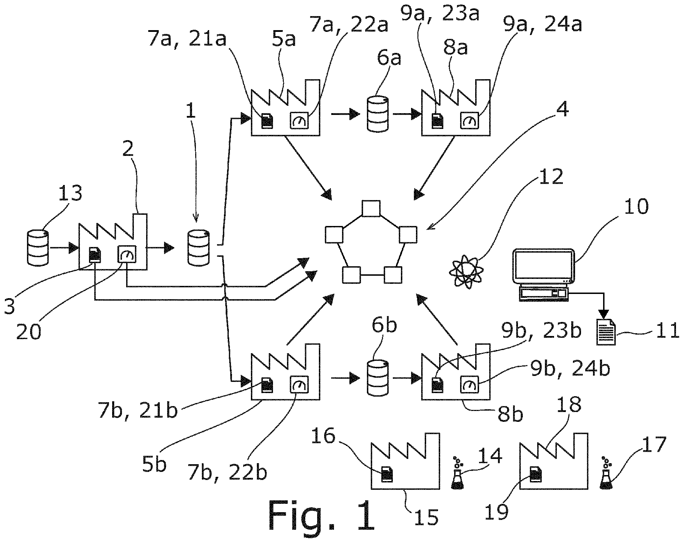

Further advantageous and preferred features are discussed in the following description with respect to the Figures. In the following it is shown in
- Fig. 1: a schematic overview of the components for carrying out an embodiment of the method according to the invention.

A precursor charge 1 of precursor material, which is here an isocyanate, is produced at a precursor production facility 2. Specific applied precursor production settings 3 determine the precursor production process and therefore also properties of the precursor charge 1. The applied precursor production settings comprise a formulation which describes the ingredients 13 and their proportions which are used for the production of the precursor charge 1. During the precursor production process, precursor production measurement data 20 is also measured from the precursor production process. The applied precursor production settings 3 and the precursor production measurement data 20 are encrypted and entered into a distributed ledger 4, which is here a blockchain.

Prior to the production of the precursor charge 1, a laboratory charge 14 of precursor material with the same formulation and therefore with the same ingredients 13 as the precursor charge 1 is produced at a laboratory facility 15.

Also prior to the production of the precursor charge 1 but after the production of the laboratory charge, a pilot plant charge 17 of precursor material also with the same formulation and therefore with the same ingredients 13 as the precursor charge 1 is produced at a pilot plant facility 18. The laboratory facility 15 and the pilot plant facility 18 are distant from each other and from the precursor production facility 2. Laboratory production data 16 from the laboratory production process as well as pilot plant production data 19 from the pilot plant production process are encrypted and entered into the distributed ledger 4.

After production, the precursor charge 1 is split into two parts, with each part being transported to a respective derivative production facility 5a, b. At each of the derivative production facilities 5a, b, the respective part of the precursor charge undergoes a derivative physical production process which results in a respective derivative product 6a, b, which is here a respective mattress.

Respective derivative production settings 21a, b are applied at each derivative production facility 5a, b to determine properties of the respective derivative product 6a, b. Those respective derivative production settings 21a, b were determined with the benefit of the applied precursor production settings 3, the laboratory production data 16, the pilot plant production data 19 and the precursor production measurement data 20. In this way, the derivative physical production process may be adjusted to compensate for any peculiarities or deviations which may be determined on the basis of the applied precursor production settings 3, the laboratory production data 16, the pilot plant production data 19 or the precursor production measurement data 20. In order to be able to access that data, the respective operator of the derivative production facilities 5a, b is given access to the distributed ledger 4 as well as a key for decrypting that aforementioned data which was entered into the distributed ledger 4 in encrypted form.

After production, the derivative production settings 21a, b as well as derivative process measurements 22a, b, which together form respective derivative production data 7a, b, are also encrypted and entered into the distributed ledger 4. Also, the derivative products 6a, b are transported to warehouses, to points of sale and finally to customers and stay in use there for a number of years.

Eventually, each derivative product 6a, b is transported to a respective recycling facility 8a, b for recycling. The recycling process at each recycling facility 8a, b comprises identifying certain kinds of polyurethane and recovering each kind as completely and as accurately as possible for each derivative product 6a, b. The recycling process is determined by recycling process settings 23a, b. In an approach that is analogous to the determination of the derivative production settings 21a, b, the respective operator of the recycling facility 8a, b is given access to the distributed ledger 4 as well as the necessary key or keys for decrypting the data therein. Thereby, the applied precursor production settings 3, the laboratory production data 16, the pilot plant production data 19, the precursor production measurement data 20 and the derivative production data 7a, b may be analyzed in order to optimize the recycling process settings 23a, b to apply to the recycling process. A respective recycling quality metric 24a, b is determined which describes and quantifies the amount of the specific polyurethanes that was recovered in the recycling process. The recycling quality metrics 24a, b together with the recycling process settings 23a, b form respective recycling data 9a, b, which is also encrypted and entered into the distributed ledger 4.

An analysis system 4 with access to all necessary keys to decrypting the encrypted data entered into the distributed ledger 4 retrieves and decrypts this data and applies it to a computational modeling system 12. With the benefit of this extensive data from different stages leading up to the recycling of the derivative products 6a, b, the computational modelling system 12 is able to determine updated precursor production settings 11 which are able to improve the recycling process in the sense quantified by the recycling quality metrics 24a, b. These updated precursor production settings 11 may be used for the production of the next precursor charge.

## Claims

1. Method for improving a physical production process, wherein a precursor charge (1) of precursor material is produced at a precursor production facility (2) through a precursor production process based on applied precursor production settings (3), wherein the applied precursor production settings (3) are entered into a distributed ledger (4), wherein a derivative product (6a, b) is produced at a derivative production facility (5a, b) through a derivative physical production process from at least part of the precursor charge (1), which derivative production facility (5a, b) is distant from the precursor production facility (2), wherein derivative production data (7a, b) describing the derivative physical production process are entered into the distributed ledger (4), wherein the derivative product (6a, b) is recycled at a recycling facility (8a, b) through a recycling process, which recycling facility (8a, b) is distant from the derivative production facility (5a, b), wherein recycling data (9a, b) describing the recycling process are entered into the distributed ledger (4), wherein an analysis system (10) retrieves and enters the applied precursor production settings (3), the derivative production data (7a, b) and the recycling data (9a, b) from the distributed ledger (4) to a computational modelling system (12), which computational modelling system (12) describes a computational relationship between the derivative production data (7a, b), the precursor production settings (3) and the recycling data (9a, b), to obtain updated precursor production settings (11), and wherein the updated precursor production settings are applied to a next precursor production process to obtain a next precursor charge of precursor material.

2. Method according to claim 1, **characterized in that** the applied precursor production settings (3) comprise a precursor formulation for specifying ingredients (13) for the production of the precursor charge (1) of precursor material.

3. Method according to claim 1 or 2, **characterized in that** a laboratory charge (14) of precursor material is produced at a laboratory facility (15) in a laboratory production process and that laboratory production data (16) describing the laboratory production process are entered into the distributed ledger (4), preferably, that the laboratory production data (16) comprise the precursor formulation, in particular, that the analysis system (10) retrieves the laboratory production data (16) from the distributed ledger (4) and also enters it to the computational modelling system (12) and that the computational relationship also includes the laboratory production data (16).

4. Method according to one of claims 1 to 3, **characterized in that** a pilot plant charge (17) of precursor material is produced at a pilot plant facility (18) in a pilot plant production process and that pilot plant production data (19) describing the pilot plant production process are entered into the distributed ledger (4), preferably, that the pilot production data (19) comprise the precursor formula, in particular, that the analysis system (10) retrieves the pilot plant production data (19) from the distributed ledger (4) and also enters it to the computational modelling system (12) and that the computational relationship also includes the pilot plant production data (19).

5. Method according to one of claims 1 to 4, **characterized in that** the derivative product (6a, b) is transported in a logistics process and that logistics data describing the logistics process are entered into the distributed ledger (4), preferably, that the analysis system (10) retrieves the logistics data from the distributed ledger (4) and also enters it to the computational modelling system (12) and that the computational relationship also includes the logistics data.

6. Method according to one of claims 1 to 5, **characterized in that** precursor production measurement data (20) measured from the precursor production process are entered into the distributed ledger (4), preferably, that the analysis system (10) retrieves the precursor measurement data (20) from the distributed ledger (4) and also enters it to the computational modelling system (12) and that the computational relationship also includes the precursor production measurement data (20).

7. Method according to one of claims 1 to 6, **characterized in that** the derivative production data (7a, b) comprises derivative production settings (21a, b) applied to the derivative physical production process, preferably, that the derivative production settings (21a, b) are also determined based on the applied precursor production settings (3), preferably, that the derivative production settings (21a, b) are also determined based on the laboratory production data (16), the pilot plant production data (19) and/or the precursor production measurement data (20).

8. Method according to one of claims 1 to 7, **characterized in that** the recycling data (9a, b) comprises recycling process settings (23a, b) applied to the recycling process and that the recycling process settings (23a, b) are determined based on the applied precursor production settings (3) and the derivative production data (7a, b), preferably, that the recycling process settings (23a, b) are also determined based on the laboratory production data (16), the pilot plant production data (19), the logistics data and/or the precursor production measurement data (20).

9. Method according to one of claims 1 to 8, **characterized in that** the recycling process comprises recovering at least one substance from the derivative product (6a, b) and that the recycling data (9a, b) comprises a recycling quality metric (24a, b) for describing a quality parameter of the recycling process.

10. Method according to claim 9, **characterized in that** the recycling quality metric (24a, b) describes a quantity of toxic materials generated in the recycling process and/or that the recycling quality metric (24a, b) describes a proportion of a substance that was recovered in the recycling process.

11. Method according to claim 9 or 10, **characterized in that** the updated precursor production settings (11) are obtained in order to improve the recycling quality metric.

12. Method according to one of claims 1 to 11, **characterized in that** the applied precursor production settings (3), the derivative production data (7a, b) and the recycling data (9a, b) are entered into the distributed ledger (4) as respective encrypted applied precursor production setting (3), encrypted derivative production data (7a, b) and encrypted recycling data (9a, b), preferably, that the laboratory production data (16), the pilot plant production data (19), the logistics data and/or the precursor production measurement data (20) are entered into the distributed ledger (4) as respective encrypted laboratory production data (16), encrypted pilot plant production data (19), encrypted logistics data and/or encrypted precursor production measurement data (20).

13. Method according to one of claims 1 to 12, **characterized in that** a respective derivative product (6a, b) is produced at a plurality of derivative production facilities (5a, b) through a respective derivative physical production process from a respective part of the precursor charge (1), wherein the derivative production facilities (5a, b) are each distant from the precursor production facility (2) and to each other, wherein respective derivative production data (7a, b) describing the derivative physical production process are entered into the distributed ledger (4).

14. Method according to claim 13, **characterized in that**, **in that** the derivative production data (7a, b) from each derivative production process are entered into the distributed ledger (4) as respective encrypted derivative production data (7a, b).

15. Method according to claim 13 or 14, **characterized in that**, wherein each derivative product (6a, b) is recycled at a respective recycling facility (8a, b), each distant from the derivative production facilities (5a, b) and each other, through a respective recycling process, wherein respective recycling data (9a, b) describing the respective recycling process are entered into the distributed ledger (4), preferably, **in that** the recycling data (9a, b) from each recycling process are entered into the distributed ledger (4) as respective encrypted recycling data (9a, b).
